# EUROPEAN PATENT APPLICATION

(11) **EP 2 353 980 A1**
(43) Date of publication of application: **10.08.2011**
(21) Application number: 10153089.7
(22) Date of filing: 09.02.2010
(51) Int. Cl.: B62J 13/04, B62K 19/44, B62M 6/90

(54) **Power-source placement on electrically motorised bicycle**

(71) Applicant: Pro-Movec A/S, 8250 Egå (DK)
(72) Inventor: Rasmussen, Jan, 8210 Århus V (DK)
(74) Representative: Nielsen, Henrik Sten

(57) **Abstract**

A drive unit (20) for a motorised bicycle (10) adapted to be at least partly powered by an electrical motor (18) is disclosed. The drive unit (20) comprises: a battery pack (84) including one or more battery cells (22) for providing the electrical motor (18) with electrical energy, and a battery pack support for connecting the battery pack (84) to the frame (12), where the battery pack support and the battery pack (84) are adapted for positioning a battery cell of the one or more battery cells (22) between the first (64) and second (66) sprockets of the motorized bicycle (10).

## Description

The present invention generally relates to motorised bicycles powered by electrical motors More specifically, the present invention relates to the battery packs for the electrical motors, and in particular to the positioning of the battery cells of the battery packs..

A motorised bicycle is a bicycle having a motor for powering the vehicle, or for assisting the pedalling. The motor is either attached to the bicycle during its construction, or after its construction as an after-market conversions The motorised bicycles are distinguished from motorcycles by being capable of being powered by pedals alone, Some of the motorised bicycles have the pedals as the main form of propulsion, with the motor for giving extra power, e.g. when going uphill, while other motorised bicycles can be driven by their respective motor alone.

Many motorized bicycles are based on standard bicycle frames, e.g. they have a standard frame with a seat tube, down tube, head tube, seat stay and chain stay. It is also common to have a top tube interconnecting the upper end of the seat tube and the head tube. Standard bicycle technologies are also commonly used, such as breaks and gears.. There are also technologies specific for motorised bicycles, such as torque sensors and power controls for controlling the assisting of the pedalling.

The motorised bicycles may be powered by different types of engines.. The most common engines are electrical motors, e.g. positioned at the crank or at the centre of either the front or the rear wheel, powered by a battery or battery pack supported by the bicycle frame. The battery packs are commonly positioned between the seat tube and the rear wheel; in the triangle between the seat, the top, and down tubes; between the luggage carrier and the rear wheel; beside the rear wheel and hanging from the luggage carrier, or within or as a part of the seat, top, and the down tubes.

A battery pack has a certain weight and its placing on the motorised bicycle influences the balance of the bicycle. A high positioned battery pack, e.g. between the saddle tube and the rear wheel or between the luggage carrier and the rear wheel, results in a high centre-of-gravity of the motorised bicycle. This has the disadvantage that the motorised bicycle is less stable when driving" Further, it also has the disadvantage that the motorised bicycle is harder to rise from a position on its side to an upright position. If the battery pack is part of an after-market conversion, the mounting of the battery, e.g. hanging on the side from the luggage carrier, can even shift the centre-of-gravity upward as compared to the non-converted bicycle.

The battery packs of the after-market conversions are not an integral part of the motorised bicycle, but are positioned somewhere on the frame or the luggage carrier, which means that the bicycle cannot be handled or carried as an ordinary bicycle, e.g when being hung onto a tow-bar support having arms engaging the frame from its side. Further, the after-market conversions have certain requirements on the frame or luggage carrier for allowing an attachment thereto. For example, a bicycle lacking a luggage carrier cannot be fitted with an after-market conversion having a battery pack adapted to be mounted on the luggage carrier, or adapted to hang down from the luggage carrier on one side of the rear wheel. Further, for an electrical rear-wheel hub-motor, the positioning of the battery package between the saddle tube and the rear wheel, between luggage carrier and the rear wheel, or as an integral part of the luggage carrier, requires an electrical conduit that is larger than the radius of the rear wheel to connect the battery pack and the hub motor. Naturally, a battery pack adapted to hang down from the luggage carrier on one side of the rear wheel, requires a shorter electrical conduit, as it is closer to the hub of the rear-wheel hub-motor.. Built-in battery packs of motorised bicycles usually require a significant adaption of the bicycle and change of the bicycle profile as compared to that of an ordinary bicycles For example, when placing the battery pack inside the down tube, this requires the down tube to have a significantly larger diameter than the required diameter of an ordinary bicycle..

An object according to the present invention is to provide a motorised bicycle that is easy to handle, e.g when driving or carrying the bicycle, or when recharging or replacing the battery pack. A particular feature of the present invention is a low positioning of the battery pack, which has the advantage that the motorised bicycle is easier to put in upright position and balance. Another feature of the present invention is a positioning of the battery that has little influence on the profile or silhouette of the motorised bicycle when viewed from any direction, as compared to the corresponding profile or silhouette of a non-motorised bicycle, which allows the motorised bicycle to be handled as an ordinary bicycle.

In addition to the above objects, the above advantages and the above features, numerous other objects, advantages and features will be evident from the detailed descriptions given below of preferred embodiments according to the present invention. The objects, advantages and features are according to a first aspect of the present invention obtained by a drive unit for a motorised bicycle adapted to be at least partly powered by an electrical motor, the motorised bicycle comprising: a frame, a rear wheel rotationally connected to the frame, a first sprocket rotationally connected to the frame, the first sprocket further being connected to a crank arm located on the same side of the frame as the first sprocket, a second sprocket spaced apart from the first sprocket and rotationally connected to the frame, the second sprocket further being connected to the rear wheel, and an endless chain or belt interconnecting the first and second sprockets in a loop for transferring power from the crank arm to the rear wheel; the drive unit comprising: a battery pack including one or more battery cells for providing the electrical motor with electrical energy, and a battery pack support for connecting the battery pack to the frame, the battery pack support and the battery pack being adapted for positioning a battery cell of the one or more battery cells between the first and second sprockets.

The frame, first sprocket and second sprocket may be that of an ordinary bicycle, and the drive unit may be adapted to be mounted as an after-market conversion Alternatively, the frame, first sprocket and second sprocket may be adapted specifically for a motorised bicycle, with the drive unit mounted before reaching the market The muscle power of the driver is transferred to the rear wheel, converting the reciprocal motion of the driver's foot to a rotational motion of the rear wheel. The electrical motor does not have to be connected to the rear wheel, e.g. it can be a hub motor mounted on the front wheel. Further the motor may be located at the first sprocket and connected thereto, or in the saddle tube with a planetary gear and drive axle connecting to the first sprocket.

The wording *between the first and second sprockets* should be understood as a point in space on a line segment going from a point on the first sprocket to a point on the second sprocket, or a point in space displaced in a direction parallel to the rotational axis of the first sprocket from a point on a line segment going from a point on the first sprocket to a point on the second sprockets This has the advantage of giving the motorised bicycle a low centre-of-gravity. Further, the specified positioning also has little influence on the handling of the motorised bicycle as compared to that of an ordinary bicycle, since the space between the first and second sprockets is rarely used when riding, carrying, or supporting a bicycle.

Further, the battery pack support and the battery pack may be adapted for positioning the battery cell of the one or more battery cells interposed between the crank arm and the rear wheel. The wording *interposed between the* crank arm *and the rear wheel* should be understood as a point in space on a line segment going from a point on the crank arm to a point on the rear wheel., This has the effect that the battery cell is positioned close to the vertical centre of the bicycle frame, which has the advantage of a small influence on the balance of the bicycle. Alternatively or additionally, the battery pack support and the battery pack may be adapted for positioning the battery cell of the one or more battery cells directly between the first and second sprockets. The wording *directly between the first and second sprockets* should be understood as a point in space on a line segment going from a point on the first sprocket to a point on the second sprockets. This also has the effect that the battery cell is positioned close to the vertical centre of the bicycle frame, however with a slightly larger influence on the balance of the bicycle.

The battery pack support and the battery pack may further be adapted for positioning the battery cell of the one or more battery cells within the loop of the endless chain or belt. The wording *within the loop of the endless chain or belt* should be understood as a point in space on a line segment going from a first point to a second point on the endless chain or belt, or a point in space displaced in a direction parallel to the rotational axis of the first sprocket from a point on a line segment going from a first point to a second point on the endless chain or belt. The specified positioning has little influence on the handling of the motorised bicycle as compared to that of an ordinary bicycle, since the space within the endless chain or belt is rarely used when riding, carrying, or supporting a bicycle. Further, the battery pack support and the battery pack may further be adapted for positioning the battery cell of the one or more battery cells directly within the loop of the endless chain or belt.. The wording *direcfly within the loop* of *the endless chain or belt* should be understood as a point in space on a line segment going from a first point to a second point on the endless chain or belt This particular positioning has even less influence on the handling of the motorised bicycle as compared to that of an ordinary bicycle.

The battery pack support and the battery pack may further be adapted for positioning the battery cell of the one or more battery cells proximal to the first sprocket and simultaneously allowing the crank arm to complete a full revolution.. This positioning has the effect that the battery cell shifts the centre-of-gravity of the motorised bicycle forward, which may have a positive influence on the balance, in particular if the electrical motor is a rear-wheel hub-motor. Further, this particular positioning is rarely used by any other component of an ordinary bicycle, which means the battery cell can be readily positioned in an after-market conversion of most bicycles.. This particular positioning also allows for more battery cells to be positioned close to the ground, both for an after-market conversion and for a pre-market instaflatian.

The drive unit according to the first aspect of the present invention may further comprise: the electrical motor, the electrical motor being adapted to be positioned at the rear wheel. This has the effect that the distance between the battery pack and the electrical motor is small. Further, it allows for the battery pack support and the motor to be mounted in the same housing. The drive unit according to the first aspect of the present invention may further comprise: an electrical connection for connecting the battery pack and the electrical motor.. For example, the electrical connection may be an insulated electrical cable.. Alternatively, the drive unit according to the first aspect of the present invention may further comprise: the electrical motor, the electrical motor being adapted to be positioned at the first sprocket or at a front wheel of the motorised bicycles,

The drive unit according to the first aspect of the present invention may further comprise: a first electrical connector in electrical communication with the one or more battery cells and adapted for receiving electrical energy from an external source of electrical energy and a battery management unit for controlling a charging of the one or more battery cells by electrical energy from the electrical connector The first electrical connector and the battery management unit may be located proximal to the battery pack and the battery cell of the one or more battery cells, which means that the added weight of these components may contribute to lower the centre-of-gravity of the motorised bicycle.

The first electrical connector and the battery management unit may be internal elements of the battery pack, which has the effect that it allows for the battery pack to be recharged even after it has been removed from the motorised bicycles. The first electrical connector and the battery management unit may then be located proximal to the battery cell of the one or more battery cells, which means that the added weight of these components contribute to lower the centre-of-gravifiy of the motorised bicycle, which may improve the handling of the motorised bicycle, e.g. when rising it from a laying to an upright position. The battery management unit may further be adapted for controlling a discharge of electrical energy from the one or more battery cells to the electrical motor. For example, the battery management unit may control the discharge so that the battery pack delivers a constant power independent of the charge of the individual battery cells. This has the advantage of a stable powering of the motorised bicycle.

The battery pack support may be adapted for releasably supporting the battery pack. The wording *releasably supposing* is understood to mean that the battery pack can be mounted and removed without using any tools. This has the advantage that it allows for a quick replacement of a discharged battery pack with a fully charged one and that the discharged battery pack can be recharged at a different location from that of the motorized bicycles.. It also has the advantage that the battery pack can be stored at a different place than the motorised bicycles, thereby preventing theft of the battery pack or the motorised bicycle. Alternatively, the battery pack support may be adapted for supporting the battery pack as an integrated part of the motorised bicycle The drive unit according to the first aspect of the present invention may further comprise: a guard adapted for enclosing at least a segment of the endless chain or belt.. This has the advantage that it reduces the risk of coming into contact with the endless chain or belt when changing the battery pack, in particular since one of its battery cells is positioned directly between the first and second sprockets, The guard may be adapted for completely enclosing the endless chain or belt. This has the advantage that it eliminates the risk of coming into contact with the endless chain or belt when changing the battery pack..

The objects, advantages and features are according to a second aspect of the present invention obtained by a motorised bicycle adapted to be at least partly powered by an electrical motor, comprising: a frame, a rear wheel rotationally connected to the frame, a first sprocket rotationally connected to the frame, the first sprocket further being connected to a crank arm located on the same side of the frame as the first sprocket, a second sprocket spaced apart from the first sprocket and rotationally connected to the frame, the second sprocket further being connected to the rear wheel, an endless chain or belt interconnecting the first and second sprockets in a loop for transferring power from the crank arm to the rear wheel, and a drive unit comprising: a battery pack including one or more battery cells for providing the electrical motor with electrical energy, and a battery pack support connecting the battery pack to the frame; the battery pack support and the battery pack positioning a battery cell of the one or more battery cells between the first and second sprockets and within the loop of the endless chain or belt.

The battery pack support and the battery pack may further position the battery cell of the one or more battery cells within the loop of the endless chain or belts The battery pack support and the battery pack may position the battery cell of the one or more battery cells proximal to the first sprocket and simultaneously allowing the crank arm to complete a full revolution.

The frame of the motorised bicycle according to the second aspect of the present invention may have no chain stay on the same side of the frame as the first sprocket, and the drive unit may connect to the frame at the first sprocket and at the second sprocket and may be adapted to provide a support in the frame corresponding to the support of a chain stay on the same side of the frame as the first sprocket. This has the advantage that more space is freed in which battery cells may be placed. The motorised bicycle according to the second aspect of the present invention may further comprise any further feature according to the first aspect of the present invention. Further, the drive unit may comprise a bar or the like connecting to the frame at the first sprocket and at the second sprocket for increasing the structural strength of the drive unit and for providing at least some of the support in the frame corresponding to the support of a chain stay on the same side of the frame as the first sprocket.,

The objects, advantages and features are according to a third aspect of the present invention obtained by a guard system for at least partially protecting an endless chain or belt of a motorised bicycle adapted to be at least partly powered by an electrical motor, the motorised bicycle comprising: a frame, a rear wheel rotationally connected to the frame, a first sprocket rotationally connected to the frame, the first sprocket further being connected to a crank arm located on the same side of the frame as the first sprocket, and a second sprocket spaced apart from the first sprocket and ratatianally connected to the frame, the second sprocket further being connected to the rear wheel, the endless chain or belt interconnecting the first and second sprockets in a loop for transferring power from the crank arm to the rear wheel; the guard system comprising: a guard enclosing at least a segment of the endless chain or belt, and a drive unit according to the first aspect of the present invention., Additionally, the guard system may completely enclose the endless chain or belt

The first, second and third aspects of the present inventions have been specified to involve the rear wheel as a driving wheel for the sake of clarity. However, it is understood that for bicycles having the front wheel as the driving wheel, the specified drive unit, motorised bicycle, and guard system can be adapted for such bicycles, provided the second sprocket is connected to the front wheel

### Short description of the drawings

A multitude of embodiments of the different aspects of the present invention are depicted below, where:
Figure 1 illustrates a motorised bicycle according to a preferred embodiment of the present invention,
Figure 2A illustrates the motorised bicycle shown in Figure 1, but with the drive unit shown in an exploded view,
Figure 3a illustrates a schematic circuit diagram of a battery management system,
Figure 3b illustrates a schematic circuit diagram of an auxiliary charging protection of the battery management system,
Figure 4a illustrates schematic circuit diagrams of a motor management unit discharging controller, and
Figure 4b illustrates further schematic circuit diagrams of the motor management unit.

### Detailed description

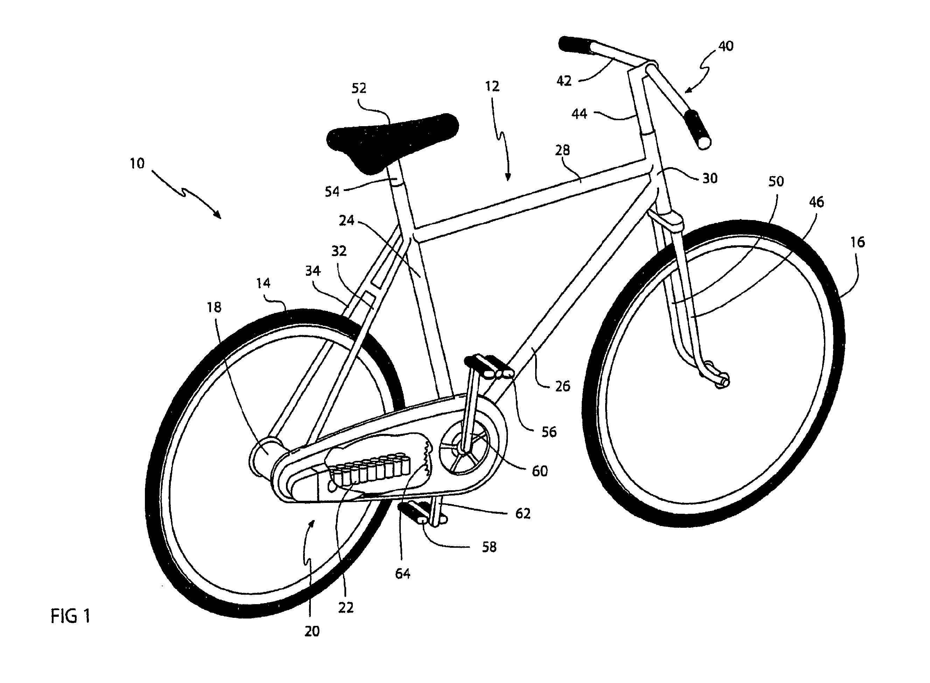

Figure 1 illustrates a motorised bicycle 10 according to the preferred embodiment of the present invention. The motorised bicycle 10 has a frame 12 rotationally connected to a rear wheel 14 and a front wheel 16. The rear wheel functions as the drive wheel when pedalling the bicycle. A brushless direct current electrical hub motor 18 is positioned at and centred on the hub of the rear wheel 14. The driving of the electrical hub motor 18 is powered and controlled by a drive unit 20. The drive unit 20 is shown with some of its parts made transparent to reveal a plurality of battery cells 22 that are rechargeable lithium-ion cells. The plurality of battery cells 22 power the electrical hub motor 18.

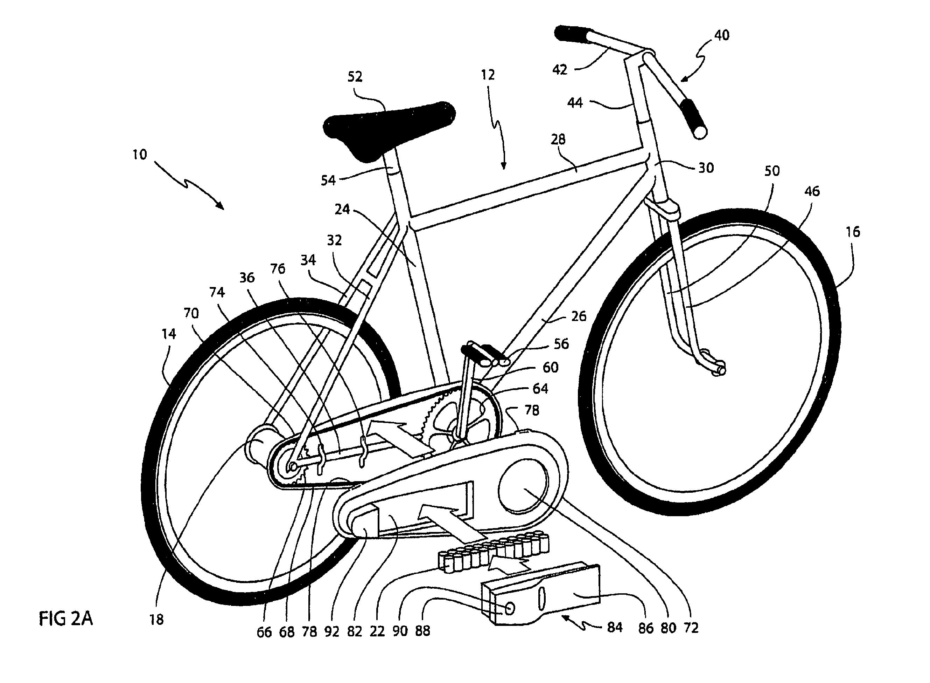

The frame 12 has a seat tube 24, a down tube 26, a head tube 30, and a top tube 28, connected in a closed loop in the presented border. The seat tube 24, a right seat stay 32, and a right chain stay 36 are connected in a closed loop in the presented order. Similarly, the seat tube 24, a left seat stay 34, and a left chain stay are connected in a closed loop in the presented order. The axle of the rear wheel 14 connects the right seat stay 32 and chain stay with the left seat stay 34 and chain stay at the points where the seat and chain stays meet. The right chain stay 36 is shown in the subsequent Figure 2a.. The left chain stay is not shown, but is located directly on the opposite side of the rear wheel 14 from the right chain stay 36.

The motorised bicycle further has a front set 40 for steering the vehicle. The front set 40 has a handle bar 42 centred on a stem 44 rigidly connecting to a fork 46 inside the head tube 30. The fork 46 is rotationally connected to the head tube 30. The axle of the front wheel 16 connects the right 48 and left 50 arms of the fork 46..

The motorised bicycle 10 has a seat 52 supported on a seat post 54 telescoping from the seat tube 24..

A right pedal 56 is connected via a right crank arm 60 to a first sprocket 64 positioned on the right side of the frame 12 and rotationally connected thereto at the lower end of the seat tube 24. Similarly, a left pedal 58 is connected via a left crank arm 62 to the first sprocket 64 through a first bracket bearing axle at the lower end of the seat tube 24. The first sprocket 64 is connected to a second sprocket 66 via an endless chain 68 in the form of a roller chain, as is shown in Figure 2a.. The second sprocket 66 is in turn connected to the rear wheel 34, thus allowing muscle power applied to the right 56 and left 58 pedals to be transmitted to the rear wheel 14.

Each of the battery cells of the plurality of battery cells 22 are positioned at a point on a line between the closest points of the first 64 and second 66 sprockets. This means that the plurality of battery cells 22 are positioned between the first 64 and second 66 sprockets, and within the loop of the endless chain 68. This positioning of the plurality of battery cells 22 has the effect of lower centre-of-gravity as compared to a positioning at the seat 24, down 26, and top 28 tubes. Even though the plurality of battery cells 22 are positioned on one side of the frame 12, they are positioned close to the frame 12 and the rear wheel 14, and will therefore have an insignificant negative effect on the balance of the motorised bicycle.. This negative effect is greatly overcome by the lowered centre-of-gravity due to the positioning. Further, the positioning only has a small influence of the sideways profile of the motorised bicycle 10 as compared to an ordinary bicycle. The plurality of battery cells 22 are positioned such that when the right crank arm 60 points backwards, some of the battery cells of the plurality of battery cells 22 are positioned between the right crank arm 60 and the right chain stay 36, where the latter is shown in Figure 2a.

Figure 2a illustrates the same motorised bicycle 10 as in Figure 1, but with the drive unit 20 shown in exploded view revealing its different components. The drive unit has an inner part 70 rigidly mounted on the right chain stay 36 by a first 74 and a second 76 u-bolt spaced apart along the right chain stay 36- The inner part 70 is partly positioned between the right chain stay 36 and the rear wheel 14. Further, the drive unit 20 has an outer part 72 that can be rigidly attached to the inner part 70 by a plurality of holders several support. When the outer part 72 is attached to the inner part 70 they form a guard completely enclosing the endless chain 68. The outer part 72 has an aperture 80 through which the right crank arm 60 extends and a recess 82 for receiving a battery pack 84 supporting the plurality of battery cells 22 within an enclosing housing 86.. The enclosing battery pack 84 is releasably supported within the recess 82.. The housing can be opened to replace the plurality of battery cells 22. The dimension and shape of the recess 82 and the housing 86 are such that the battery pack 84 fits closely within the recess 82, whereby the inner 70 and outer 72 parts have the function of a battery pack support. In an alternative embodiment, the plurality of battery cells 22 is an integrated part of the motorised bicycle 10.

The battery pack 84 has a protrusion covering a battery management system 88 and fitted with an electrical connecter 90 in the form of a female terminal through which electrical energy can be received from an external source of electrical energy.. In an alternative embodiment, the electrical connector 90 is a male terminal. The battery management system 88 is in electrical communication with the electrical connector 90 and the plurality of battery cells 22. The battery management system 88 controls the charging of the plurality of battery cells 22., This means that the plurality of battery cells 22 can be recharged both when the battery pack 84 is supported by the battery pack support and when it has been removed from the battery pack support. The battery pack 84 is releasably connected to the outer part 72, which means that it can be removed and replaced by another battery pack without using any tools.

The battery management system 88 further controls the discharge of electrical energy from the plurality of battery cells 22 to the electrical hub motor 18. The battery management system 88 is in electrical communication with the electrical hub motor 18 through electrical cables and controls the driving of the motorised bicycles 10 by the electrical motor 18.

The outer part 72 further has a protrusion covering a motor management unit 92 controlling the driving of the hub motor with respect to commands or feedback, such as pedalling, from the driver of the motorised bicycle 10.

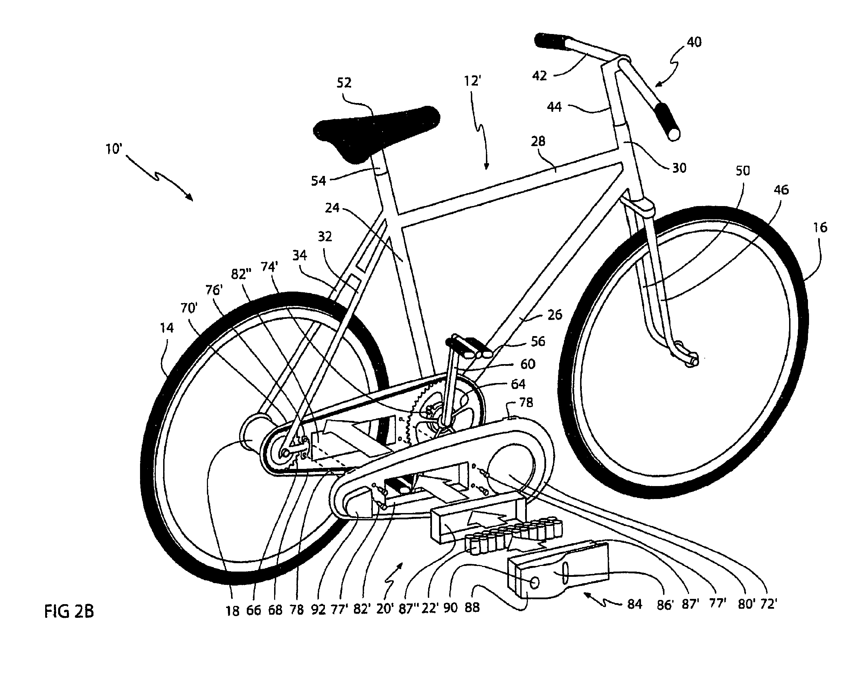

Figure 2b illustrates an alternative embodiment to the motorised bicycle 10' of Figure 2a, with the drive unit 20' shown in an exploded view revealing its different components. The drive unit has an inner part 70' rigidly mounted on the frame 12 by a first holder 74' at the first sprocket 64 and a second holder 76' at the second sprocket 66. The inner part 70' interconnects the first holder 74' and the second holder 76' and provides a support to the frame 12'corresponding to that of a right chain stay. Further, the drive unit 20' has an outer part 72' that is rigidly attached to the inner part 70' by a plurality of screws 77'. Some of the screws 77' engage the second holder 76', while the remaining screw 77' directly engages the inner part 70'. The drive unit 20' of is preferably mounted to the frame 12' before reaching the market.

When the outer part 72' is attached to the inner part 70', they form a guard completely enclosing the endless chain 68. The outer part 72' has an aperture 80' through which the right crank arm 60 extends and a recess 82' for receiving a battery pack 84' supporting the plurality of battery cells 22' within a housing 86' composed of a front section 87' and a back section 87. The battery pack 84' is releasably supported within the recess 82. The battery pack 84' can be opened to replace the plurality of battery cells 22'. The dimension and shape of the recess 82' and the housing 86' are such that the battery pack 84' fits closely within the recess 82', whereby the inner 70' and outer 72' parts have the function of a battery pack support.

Further, in an alternative embodiment the inner part 70' comprises a bar for increasing its structural strength and to provide a significant portion of a support in the frame corresponding to that of an ordinary chain stay as in the preferred embodiment shown in Figure 2a.. The bar connects to the frame 12' at the first sprocket and at the second sprocket..

The features of the alternative embodiments shown in Figure 2b that are identical to the features of the preferred embodiment shown in Figure 2a have been given the same indexing The features of the alternative and the preferred embodiments that are different but have related functions have been given the same number, but are instead distinguished by priming in Figure 2b.

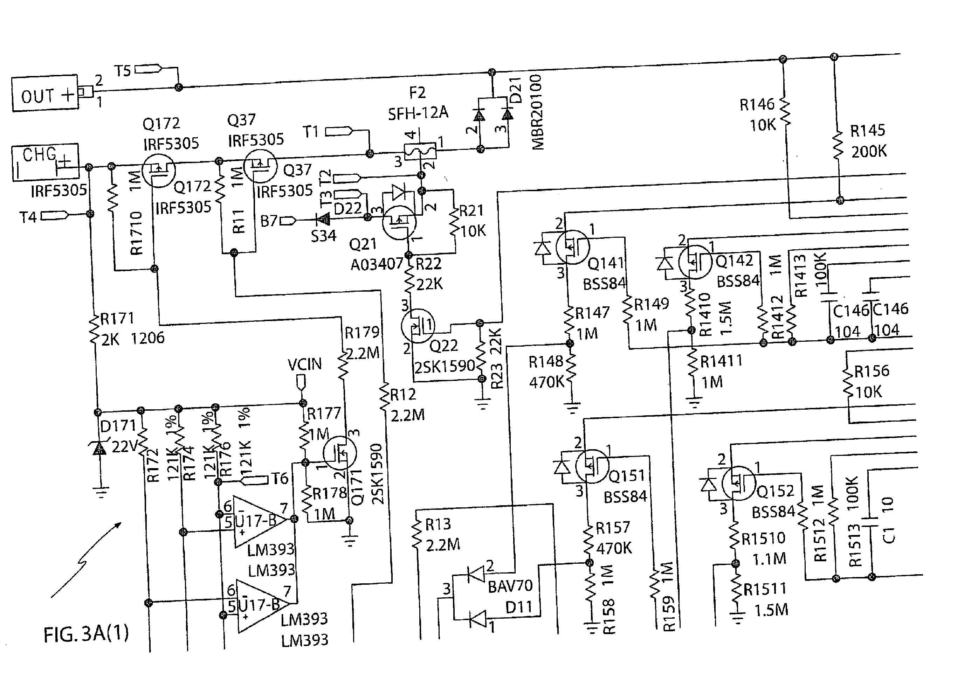

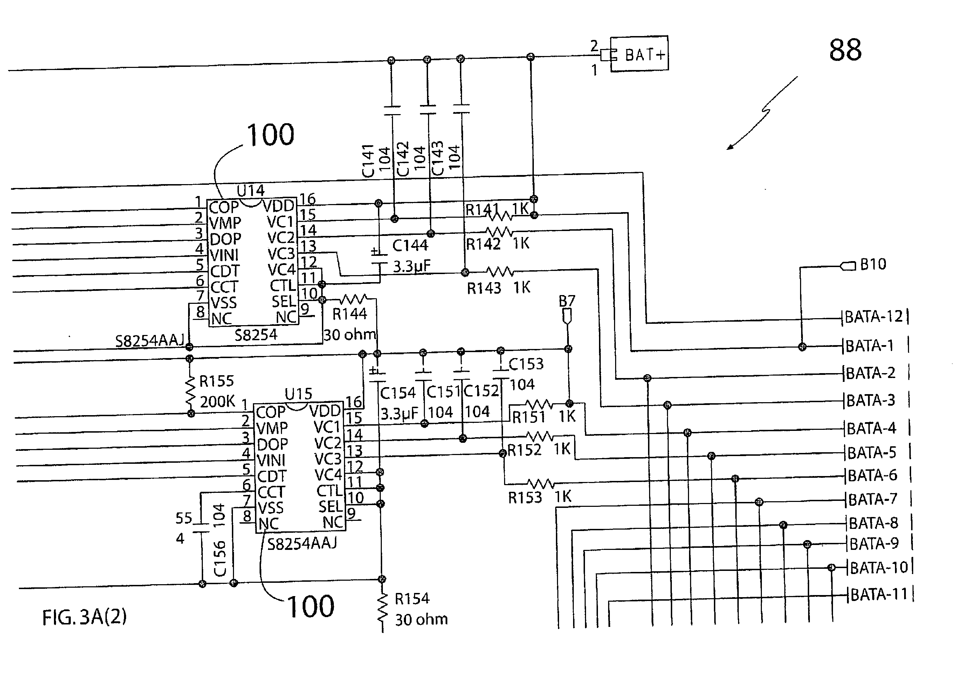

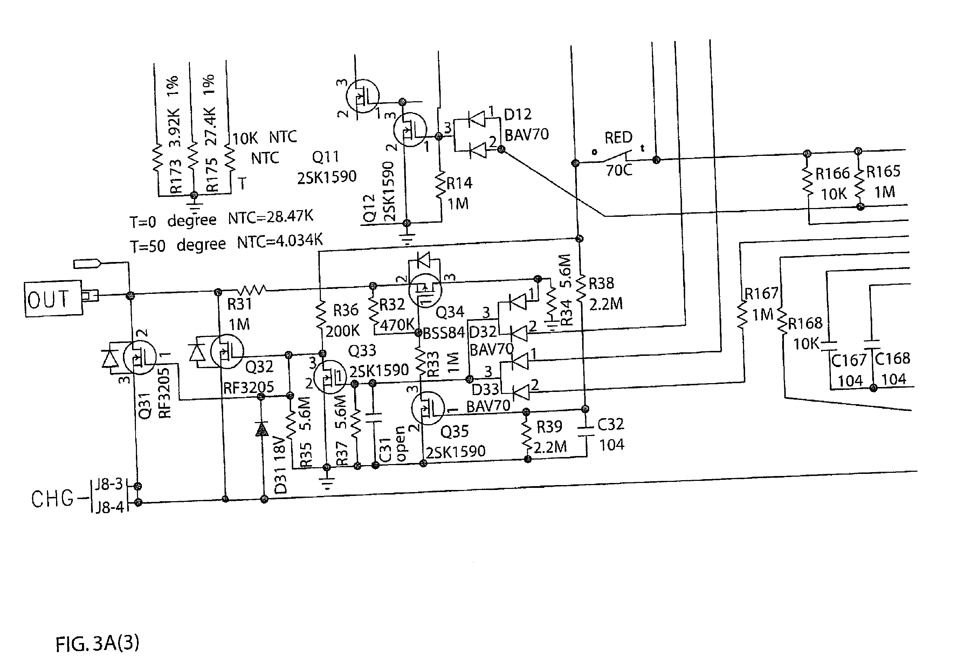

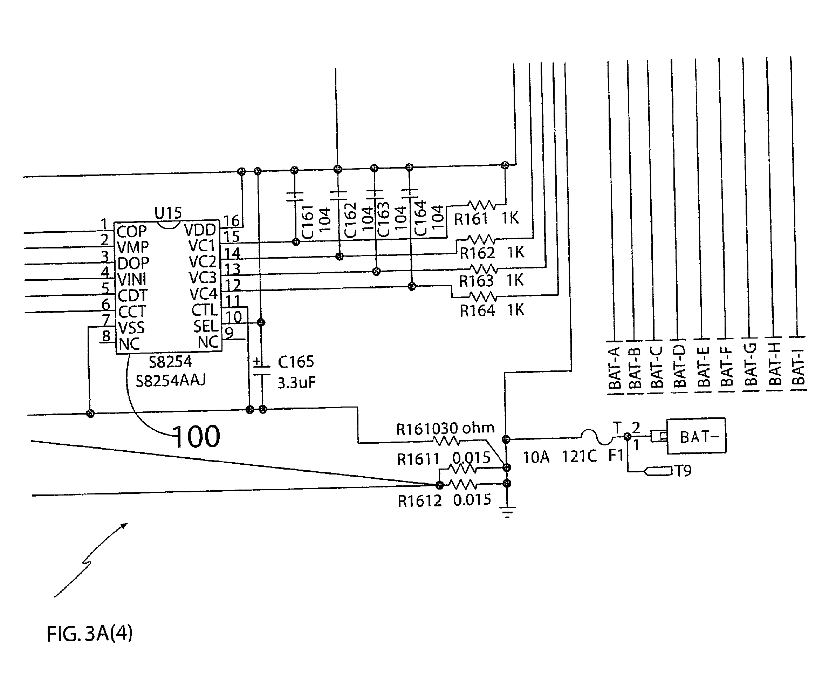

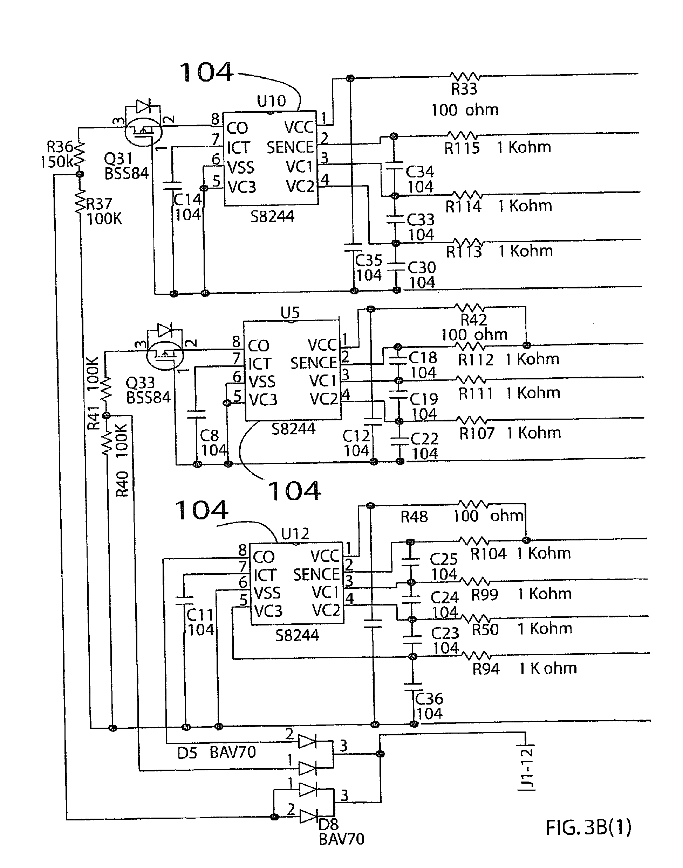

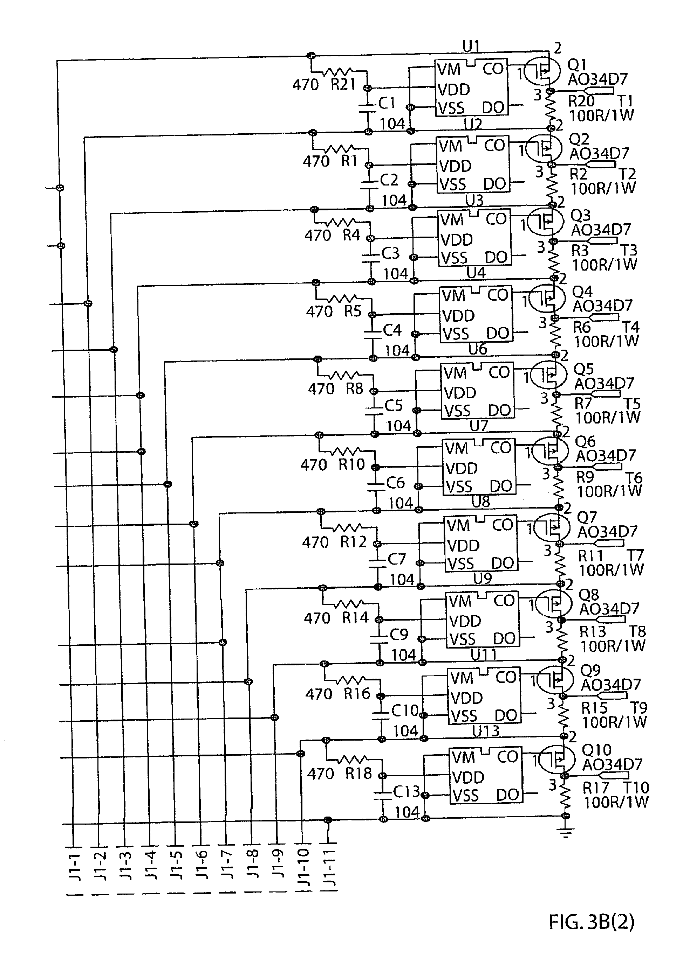

Figure 3a illustrates a schematic circuit diagram of a preferred embodiment of the battery management system 88.. The battery management system includes a number of S-8254 battery protection integrated circuits 100 described in detail in "BATTERY PROTECTION IC FOR 3-SERIAL OR 4-SERIAL-CELL PACK", S-8254, Rev.2.3_00, by Seiko Instruments Inc. Figure 3b illustrates a schematic circuit diagram of an additional auxiliary charging protection 102 of the battery management system 88. The auxiliary charging protection 102 includes a number of S-8244 battery protection integrated circuits 104 described in detail in "BATTERY PROTECTION IC FOR SERIES CONNECTION OF 1 TO 4 CELLS (SECONDARY PROTECTION)", S-8244, Rev.fl.8, by Seiko Instruments lnc..

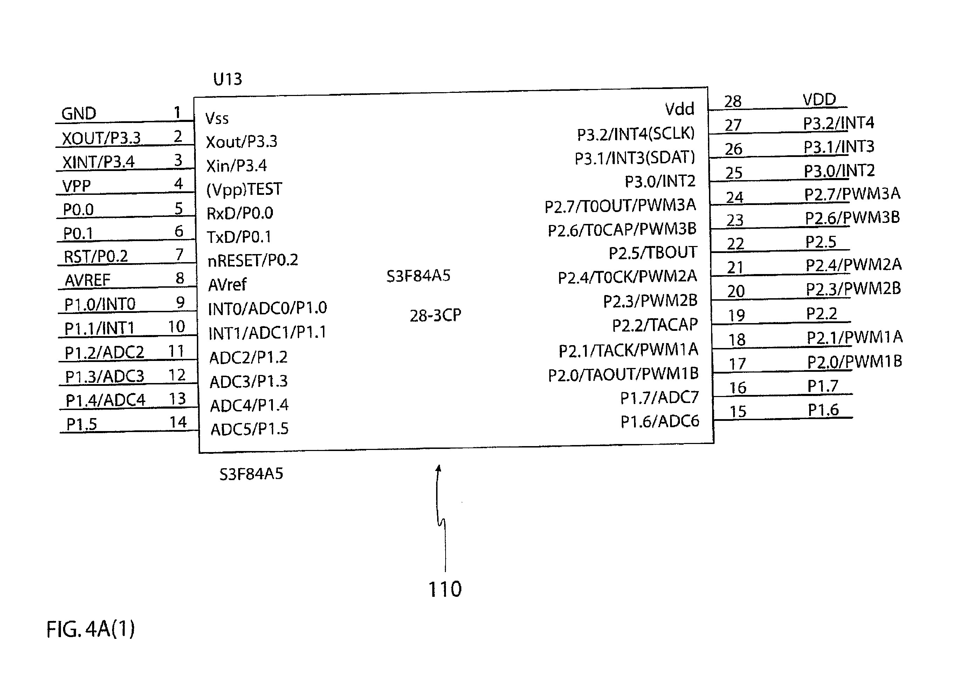

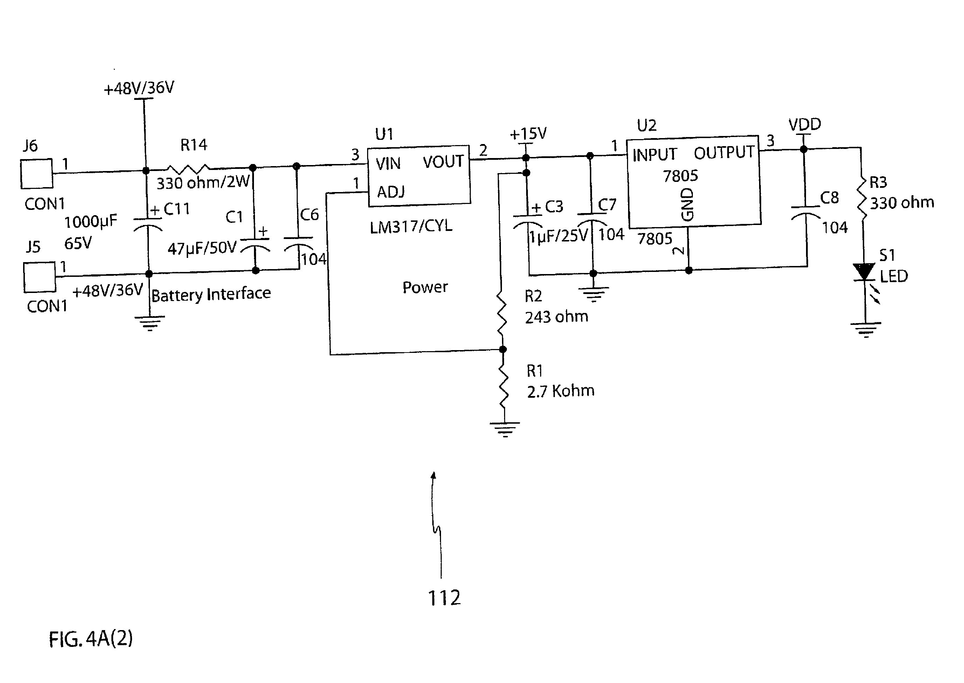

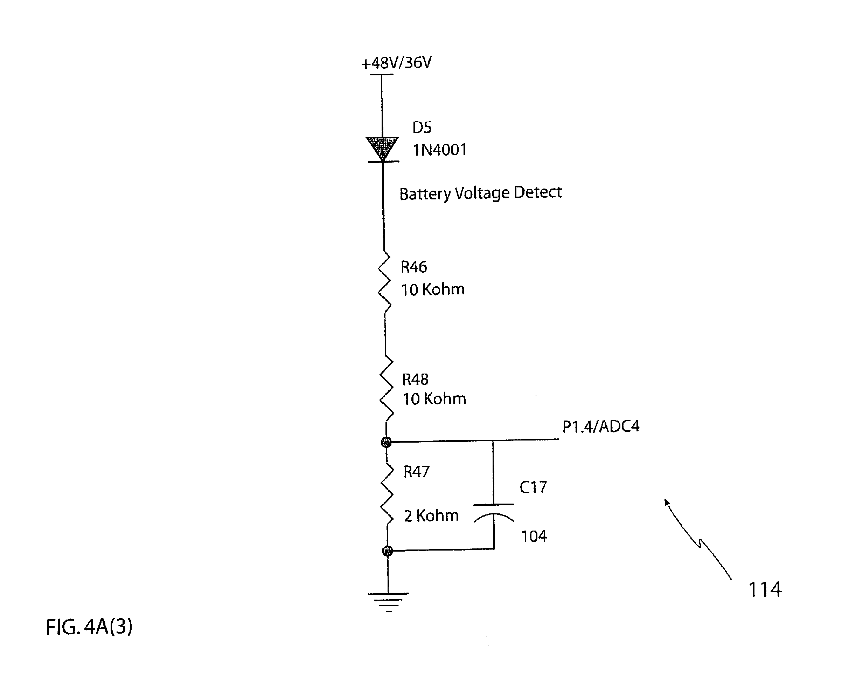

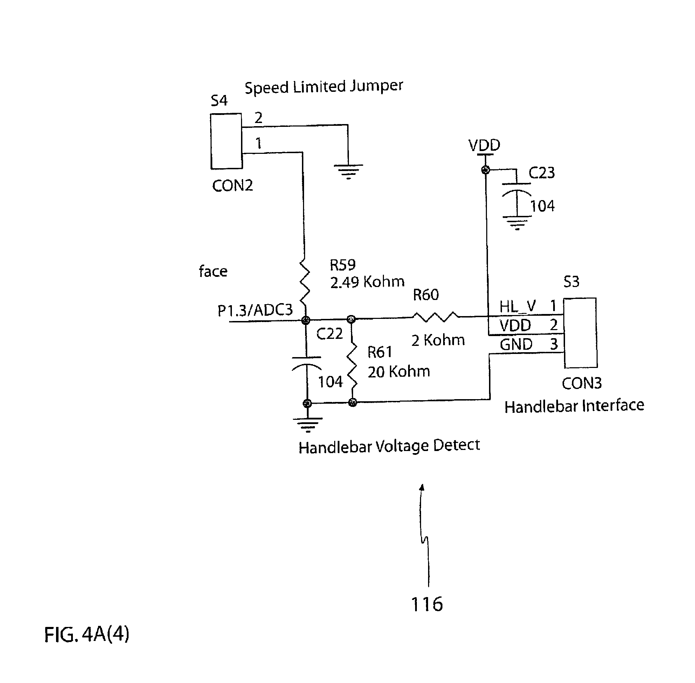

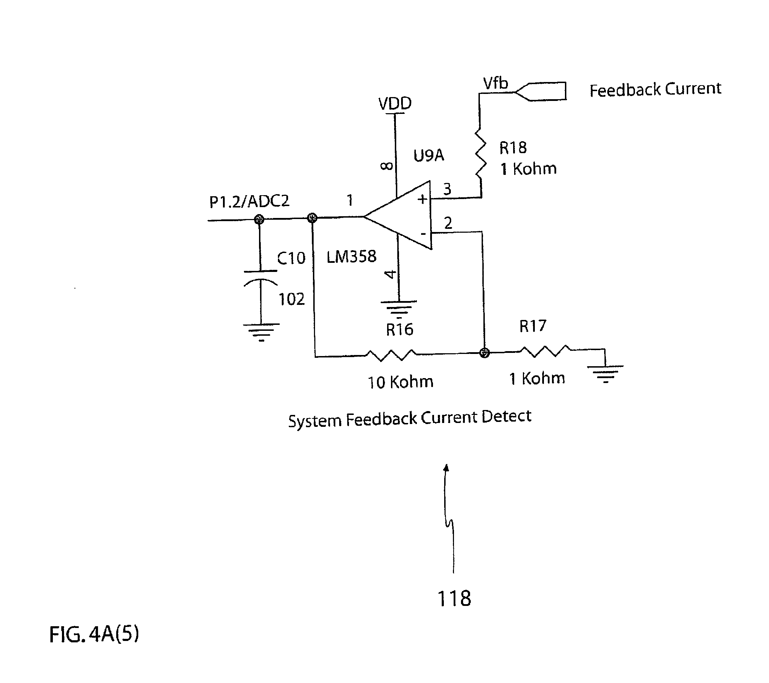

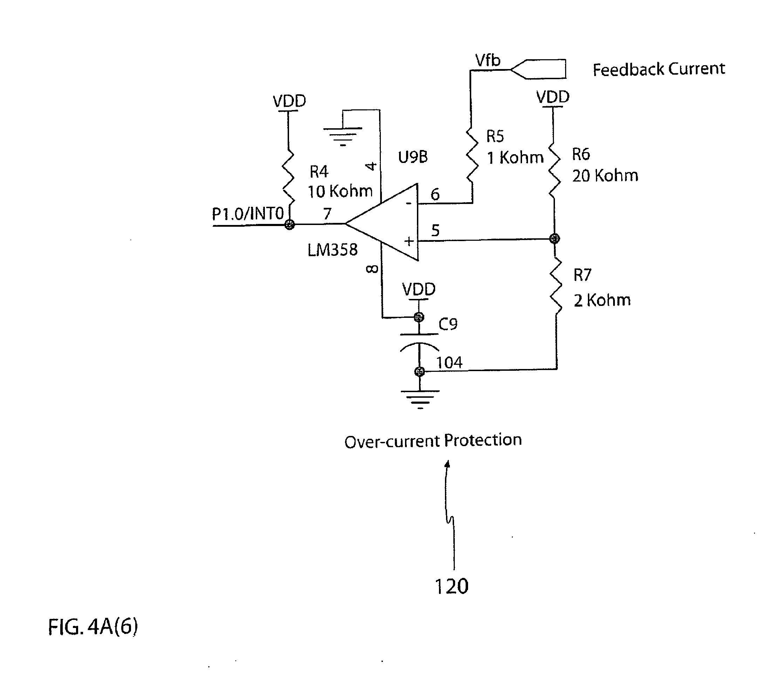

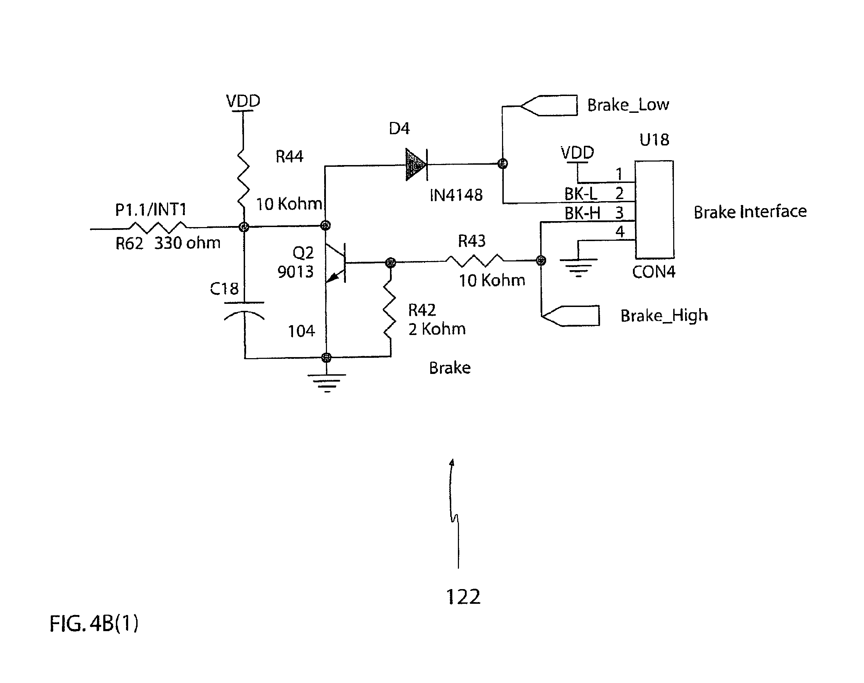

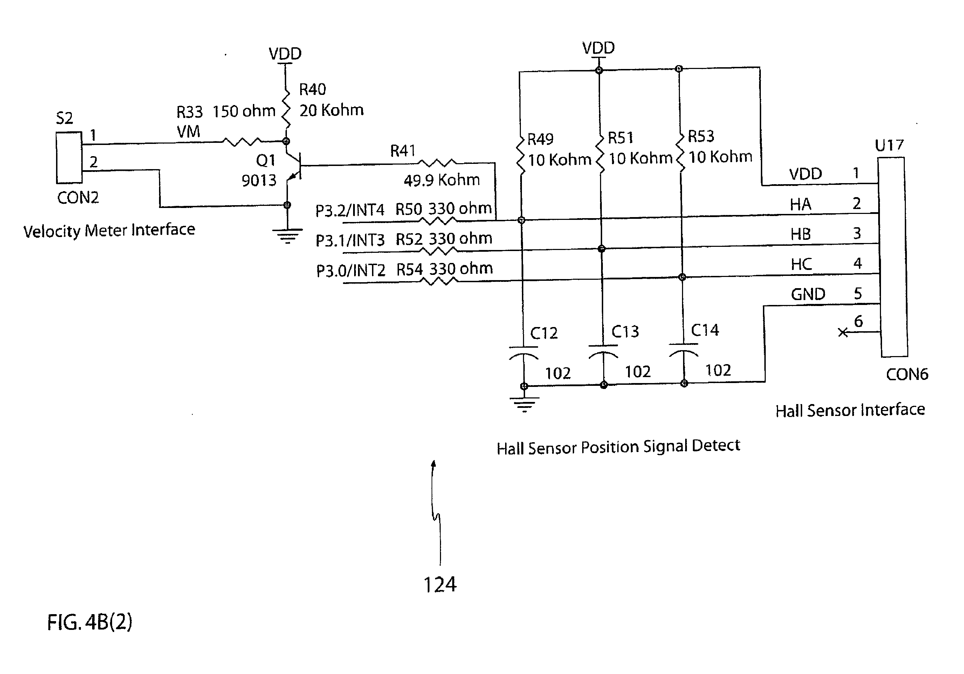

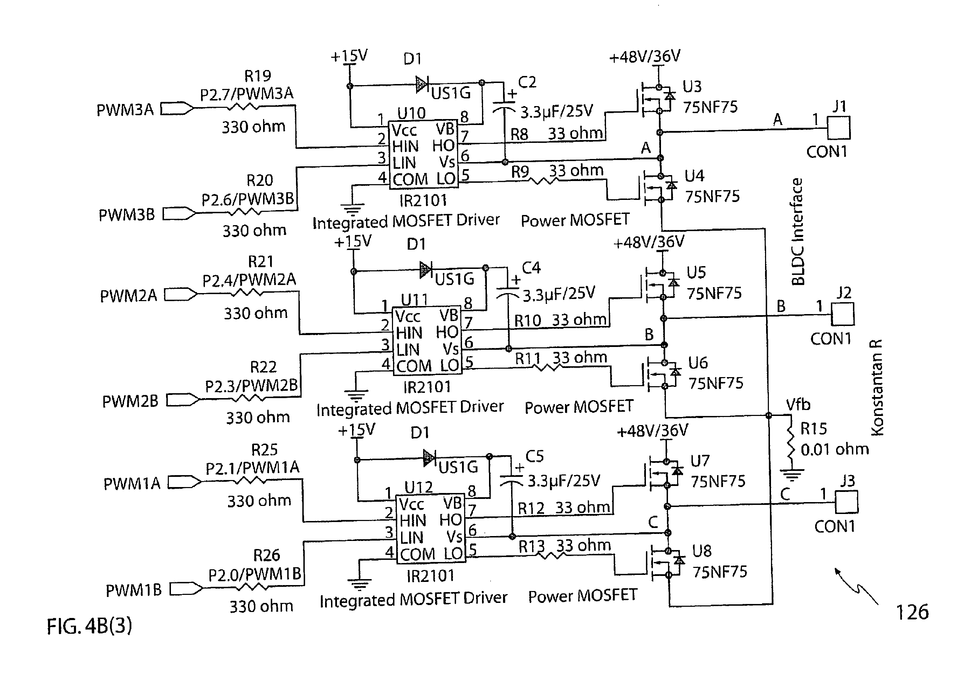

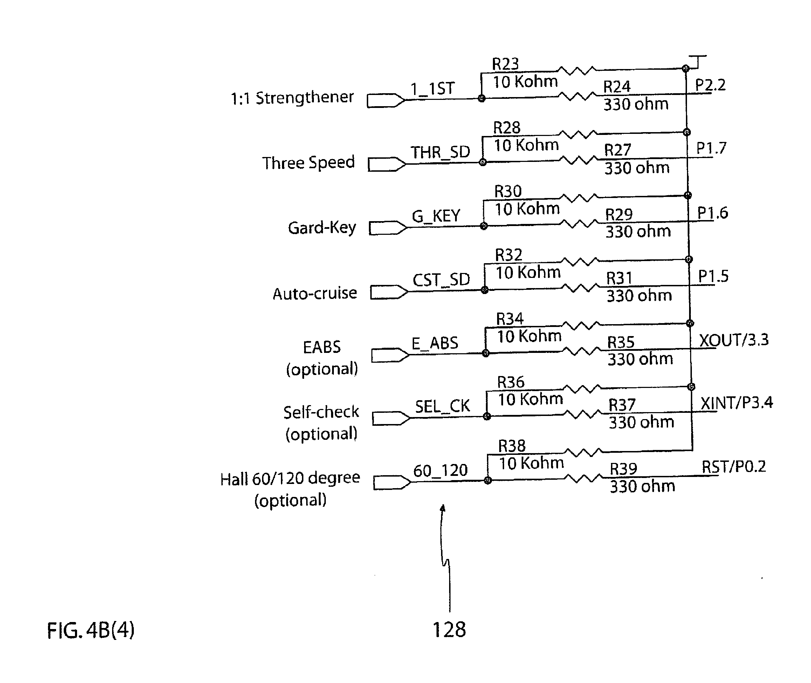

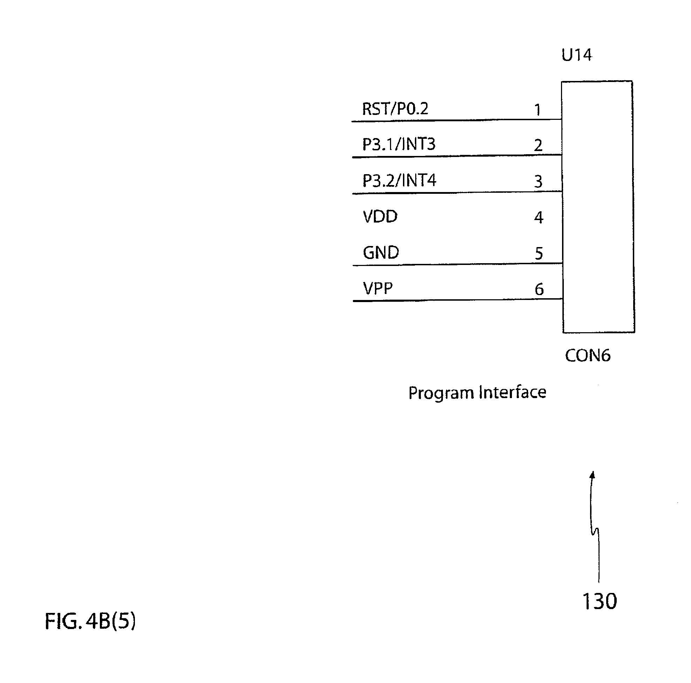

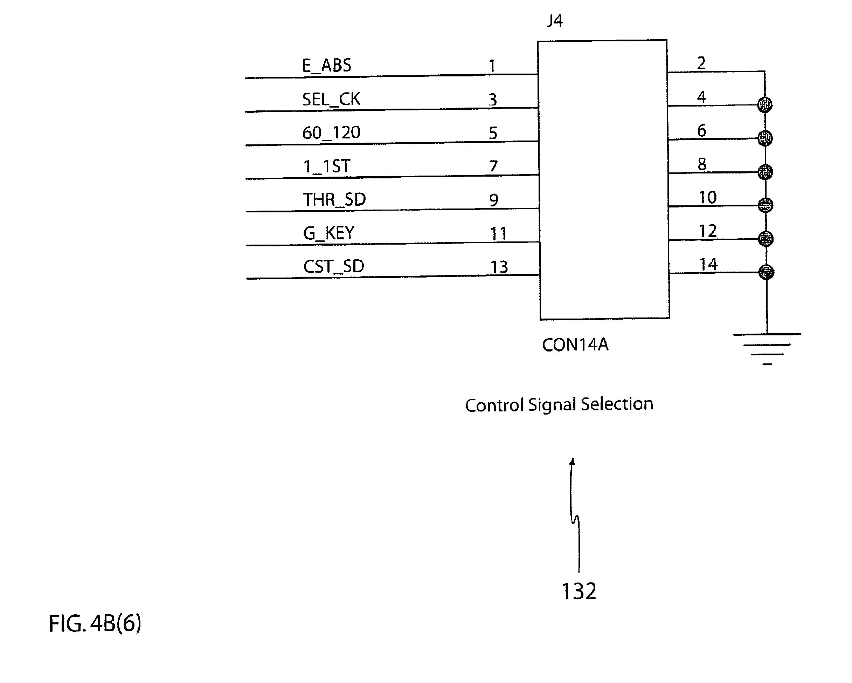

Figure 4a and 4b illustrates schematic circuit diagrams of a motor management unit based on a S3F84A5 8-bit CMOS Microcontroller 110, which is described in detail in "USER'S MANUAL, S3F84A5, 8-Bit CMOS Microcontrollers", May 2009, REV 1.00, by Samsung Electronics Co., Ltd. The motor management unit further has a power supply interface 112, a battery voltage detect circuit 114, a handlebar voltage detect and speed limit circuit 116, a system feedback current detect circuit 118, a system over-current protection circuit 120, a break mechanism circuit 122, a Hall sensor position detect and velocity meter circuit 124, a power MOSFET and integrated driver circuit 126, an other function input selection circuit 128, a program interface 130, and a control signal selector 132. The S3F84A5 8-bit CMOS Microcontroller .110 and the circuit diagrams 112-132 are further described in "S3F84A5 APPLICATION NOTE REV1.0, E-BIKE CONTROLLER", by Samsung Electronics Co., Ltd

## Claims

1. A drive unit for a motorised bicycle adapted to be at least partly powered by an electrical motor, said motorised bicycle comprising:
a frame,
a rear wheel rotationally connected to said frame,
a first sprocket rotationally connected to said frame, said first sprocket further being connected to a crank arm located on the same side of said frame as said first sprocket,
a second sprocket spaced apart from said first sprocket and rotationally connected to said frame, said second sprocket further being connected to said rear wheel, and
an endless chain or belt interconnecting said first and second sprockets in a loop for transferring power from said crank arm to said rear wheel,
said drive unit comprising:
a battery pack including one or more battery cells for providing said electrical motor with electrical energy, and
a battery pack support for connecting said battery pack to said frame,
said battery pack support and said battery pack being adapted for positioning a battery cell of said one or more battery cells between said first and second sprockets.

2. The drive unit according to claim 1, **characterised by** said battery pack support and said battery pack further being adapted for positioning said battery cells of said one or more cells within said loop of said endless chain or belt..

3. The drive unit according to any of the claims 1 to 2, **characterised by** said battery pack support and said battery pack being adapted for positioning said battery cell of said one or more battery cells proximal to said first sprocket and simultaneously allowing said crank arm to complete a full revolution

4. The drive unit according to any of the claims 1 to 3, **characterised by** further comprising:
an electrical connection for connecting said battery pack and said electrical motor.

5. The drive unit according to any of the claims 1 to 4, **characterised by** further comprising:
a first electrical connector in electrical communication with said one or more battery cells and adapted for receiving electrical energy from an external source of electrical energy, and
a battery management unit for controlling a charging of said one or more battery cells by electrical energy from said electrical connector.

6. The drive unit according to claim 5, **characterised by** said battery management further being adapted for controlling a discharge of electrical energy from said one or more battery cells to said electrical motor.

7. The drive unit according to any of the claims 1 to 6, **characterised by** said battery pack support being adapted for releasably supporting said battery pack

8. The drive unit according to any of the claims 1 to 7, **characterised by** further comprising:
a guard adapted for enclosing at least a segment of said endless chain or belt.

9. The drive unit according to claim 8, **characterised by** said guard being adapted for completely enclosing said endless chain or belt..

10. A motorised bicycle adapted to be at least partly powered by an electrical motor, comprising:
a frame,
a rear wheel rotationally connected to said frame,
a first sprocket rotationally connected to said frame, said first sprocket further being connected to a crank arm located on the same side of the frame as said first sprocket,
a second sprocket spaced apart from said first sprocket and rotationally connected to said frame, said second sprocket further being connected to said rear wheel,
an endless chain or belt interconnecting said first and second sprockets in a loop for transferring power from said crank arm to said rear wheel, and
a drive unit comprising:
a battery pack including one or more battery cells for providing said electrical motor with electrical energy, and
a battery pack support connecting said battery pack to said frame, said battery pack support and said battery pack positioning a battery cell of said one or more battery cells between said first and second sprockets and within said loop of said endless chain or belt

11. The motorised bicycle according to claim 10, **characterised by** said battery pack support and said battery pack further positioning said battery cell of said one or more battery cells within said loop of said endless chain or belt.

12. The motorised bicycles according to any of the claims 10 to 11, **characterised by** said frame having no chain stay on the same side of said frame as said first sprocket, and said drive unit connecting to said frame at said first sprocket and at said second sprocket and being adapted to provide a support in said frame corresponding to the support of a chain stay on the same side of said frame as said first sprocket.

13. The motorised bicycle according to any of the claims 10 to 12, **characterised by** said drive unit further comprising any of the features according to any of the claims 3 to 9.

14. A guard system for at least partially protecting an endless chain or belt of a motorised bicycle adapted to be at least partly powered by an electrical motor, said motorised bicycle comprising:
a frame,
a rear wheel rotationally connected to said frame,
a first sprocket rotationally connected to said frame, said first sprocket further being connected to a crank arm located on the same side of the frame as said first sprocket, and
a second sprocket spaced apart from said first sprocket and rotationally connected to said frame, said second sprocket further being connected to said rear wheel,
said endless chain or belt interconnecting said first and second sprockets in a loop for transferring power from said crank arm to said rear wheel, said guard system comprising:
a guard enclosing at least a segment of said endless chain or belt,
and
a drive unit according to any of the claims 1 to 9.

15. The guard system according to claim 14, **characterised by** completely enclosing said endless chain or belt..
